# EUROPEAN PATENT APPLICATION

(11) **EP 4 421 711 A1**
(43) Date of publication of application: **28.08.2024**
(21) Application number: 23382171.9
(22) Date of filing: 24.02.2023
(51) Int. Cl.: G06Q 20/06, G06Q 20/36, G06Q 20/38

(54) **A METHOD AND A SYSTEM FOR PERFORMING TRANSACTIONS ON BLOCKCHAIN SERVICES**

(71) Applicant: Telefonica Innovacion Digital SL, 28050 Madrid (ES)
(72) Inventor: Rubio Viñuela, Yaiza, 28013 Madrid (ES); Martínez Álvarez, Javier, 28013 Madrid (ES)
(74) Representative: Carlos Hernando, Borja

(57) **Abstract**

A method and a system for performing transactions on blockchain services. The method comprises performing, by a user using a computing device, a transaction on a blockchain service of a given blockchain, the blockchain service being offered by a service provider. The given transaction is performed by using a phone number of the user as a reference identifier on the blockchain service, the phone number being associated with at least one public address of a wallet account of the user.

## Description

### Technical Field

The present invention relates to a method and a system for performing transactions on blockchain services. More particularly, the invention provides a new solution that allows users to make transactions on the Web3 in a more natural and simple way by matching their phone number (MSISDN) with the public address of their wallets.

### Background of the Invention

Due to the decentralized nature of the Web3 there is no service that allows a user to identify easily, cross chain and securely who is the person he is interacting with, since the only thing the user sees is the public key of a wallet account decentralized identifier (DID), which is a hexadecimal string, composed of 26-35 characters, unreadable for the user, difficult to memorize and that it is used only in Web3 applications forcing the user to have an additional identifier.

On the other hand, a phone number or Mobile Station Integrated Services Digital Network (MSISDNs) are unique identifiers by nature and are more widespread in people's mindset when interacting on the Internet.

There are currently no solutions on the market that provide a simple, secure, readable, and cross-chain solution for the user. The closest solutions are the Ethereum Name Service (ENS) and the Celo implementation.

The ENS is a distributed, open, and extensible naming system based on the Ethereum blockchain. ENS's job is to map human-readable names like 'alice.eth' to machine-readable identifiers such as Ethereum addresses, other cryptocurrency addresses, content hashes, and metadata. ENS also supports 'reverse resolution', making it possible to associate metadata such as canonical names or interface descriptions with Ethereum addresses.

Although ENS solves the issue of having a readable identifier for the user, it does not cover the following aspects that the present invention does solve:
- It is a new identifier for the user, which the user must learn, memorize, or have available.
- There is no verification to ensure that the user is who he/she claims to be, only an identifier is assigned without any validation.
- It is a different identifier for each blockchain since they are different services for each of the chains and the solutions add different suffixes to the names.
- It may be that the identifier someone wants to use is already being used by someone else, however by using the phone number this problem no longer exists because (s)he wants to identify a number that is already hers/his.

With regard to Celo, Celo's identity protocol allows users to associate their phone number with one or more addresses on the Celo blockchain. This allows users to find each other on the Celo network using phone number instead of cumbersome hexadecimal addresses. The Oblivious Decentralized Identifier Service (ODIS) was created to help preserve the privacy of phone numbers and addresses.

Although Celo solves the issue of reuse a readable identifier for the user, it does not cover the following aspects that the present invention does solve:
- It is only valid for the Celo blockchain.
- Exposes personal user information such as the phone number on the public blockchain that, that although encrypted, can be accessed by everyone granted by Celo without the user has given consent. That is, it is not a GDPR compliant solution.
- Information processing is done with asynchronous read and write operations on the blockchain. These operations are computationally and money expensive and have a latency that makes it not viable for general purpose and usable in all scenarios.

### Description of the Invention

An object of present invention is to provide a solution/technology that allows users to make transactions on blockchain services such the web3 in a more natural and simple way by matching their phone number (MSISDN) with the public address of their wallets.

The above object is achieved by the method of claim 1 and by the system of claim 8.

To that end, present invention provides, according to a first aspect, a method for performing transactions on blockchain services, the method comprises performing, by a user using a computing device, a transaction on a blockchain service of a given blockchain, the blockchain service being offered by a service provider. According to the proposed method, said given transaction is performed by using a phone number of the user as a reference identifier on the blockchain service, the phone number being associated with at least one public address of a wallet account of the user.

In some embodiments, the association of the phone number with the at least one public address is made by: invoking, by a wallet application, a POST method of a blockchain_public_address API of a first backend of a first communications operator, OB1, indicating the phone number, the public address, the blockchain, and a currency; and validating, by the OB1, that the phone number belongs to the OB1. If the phone number belongs to the OB1, the latter sends a message comprising a password to the user to verify that the user owns the phone number, and the user enters the password into the wallet application which further forwards the password to the OB1 for validation thereof, wherein if the password is correct, the OB1 invokes its API that allows associating the public address to the phone number. Alternatively, if the phone number does not belong to the OB1, the latter further invokes an OBs resolver indicating the phone number to return a backend address of the operator to which the phone number belongs, invokes the POST method of a blockchain_public_address API of a second backend of a second communications operator, OB2, indicating the phone number and the public address, and sends a message comprising a password to the user to verify that the user owns the phone number, and the user enters the password into the wallet application which further forwards the password to the OB2 for validation thereof, wherein if the password is correct, the OB2 invokes its API that allows associating the public address to the phone number.

In some particular embodiments, the password comprises a One Time Password.

In some embodiments, the at least one public address associated to the phone number is retrieved by: invoking, by a client application, a GET method of the blockchain_public_address API of the OB1 indicating the phone number; and validating, by the OB1, that the phone number belongs to the OB1. If the phone number belongs to the OB1, the latter further invokes the API of the OB1 to retrieve the public address. Otherwise, if the phone number does not belong to the OB1, the latter further invokes the OBs resolver indicating the phone number to return the backend address of the operator to which the phone number belongs, and invokes the GET method of the blockchain_public_address API of the OB2 indicating the phone number, and the OB2 invokes its API, the latter further returning the public address associated to the phone number.

In some embodiments, the association of the at least one public address with the phone number can be unbounded by: invoking, by the wallet application, a DELETE method of the blockchain_public_address API of the OB1 indicating a binding ID; and validating, by the OB1, that the phone number belongs to the OB1. If the phone number belongs to the OB1, the latter further invokes the API of the OB1 to unbind the public address associated to the phone number. On the other hand, if the phone number does not belong to the OB1, the latter further invokes the OBs resolver indicating the phone number to return the backend address of the operator to which the phone number belongs, and invokes the DELETE method of the blockchain_public address API of the OB2 indicating the phone number, and the OB2 invokes its API, the latter further returning a success status response.

In some particular embodiments, the success status response comprises a 200 OK response.

According to the invention, the blockchain services include web3 services.

Present invention provides, according to a second aspect, a system for performing transactions on blockchain services. The system comprises a computing device of a user and a service provider configured to offer a blockchain service of a given blockchain. According to the proposed system, a transaction on the blockchain service performed by the user is made by using a phone number of the user as a reference identifier on the blockchain service, the phone number being associated with at least one public address of a wallet account of the user.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The invention can have many application use cases, for example, when a user wants to make a transfer to a person from their mobile phone it will be as simple as choosing a user from their address book, extracting their phone number, and using this service being able to locate the public address of the user's wallet account, regardless of the operator to which the user belongs. Another interesting use case for applications is to be able to identify who is the user that is registered in a Web3 service, since by this service it can be known which is the user's phone number and from the phone number it is very easy for the operators to identify the user to whom this number belongs.

The main advantages of the present inventions are usability and privacy for customers since the invention allows them to use a widely known identifier such as the telephone number, allows that the same identifier can be used for all blockchains, and prevents a user's personal information, such as phone number or public blockchain addresses, from being shared without the user's explicit consent. Likewise, the invention allows validation that the phone number (identifier) belongs to the user, such that no one can usurp it.

### Brief Description of the Drawings

The previous and other advantages and features will be more fully understood from the following detailed description of embodiments, with reference to the attached figures, which must be considered in an illustrative and non-limiting manner, in which:
Fig. 1 illustrates the flow that allows to associate a blockchain public address to a user's phone number.
Fig. 2 illustrates the flow that allows to retrieve the blockchain public addresses associated to a user's phone number.
Fig. 3 illustrates the flow that allows to unbind the blockchain public address associated to a user's phone number.

### Detailed Description of the Invention and of Preferred Embodiments

Present invention provides a service/solution that matches a customers' DIDs together with his/hers MSISDN. By doing that, any internet service will be allowed to offer its users an easier way to make transactions on the web3, making MSISDN the reference identifier when users interact on the Web3 whatever their blockchain is.

Present invention meets the following key requirements:
- It allows reusing an identifier widely known by users and systems such as MSISDN.
- It makes it possible to ensure that the user is who he/she claims to be.
- It is the same identifier for all blockchains.
- That it is an identifier by which users already know you and no one can usurp it.

More particularly, present invention comprises implementing a service that offers three main functionalities:

### 1) Register blockchain public address:

This operation allows to associate a blockchain public address to a user's phone number involving the following agents/elements:
- User 100: Represents the user who owns the mobile phone.
- Wallet 101: Represents the client application that the user uses to manage their Web3 applications.
- OB1 Backend 200: Represents the backend of a communications operator that implements the functionalities described in the solution.
- OBs Resolver 250: It is a service that from a phone number can return the URL to the backend of the operator to which the user belongs.
- API implement by OB1 210: endpoint to associate a phone_number with a Blockchain Public Address implemented by Operator1. It does not matter if the phone_number is already bound to a Blockchain Public Address, as this operation adds a new Blockchain Public Address.
- Other OB Backend (OB2) 300: Represents another operator different from the one to which the user's phone number belongs.
- API implement by OB2 310: endpoint to associate a phone_number with a Blockchain Public Address implemented by Operator2. It does not matter if the phone_number is already bound to a Blockchain Public Address, as this operation adds a new Blockchain Public Address.

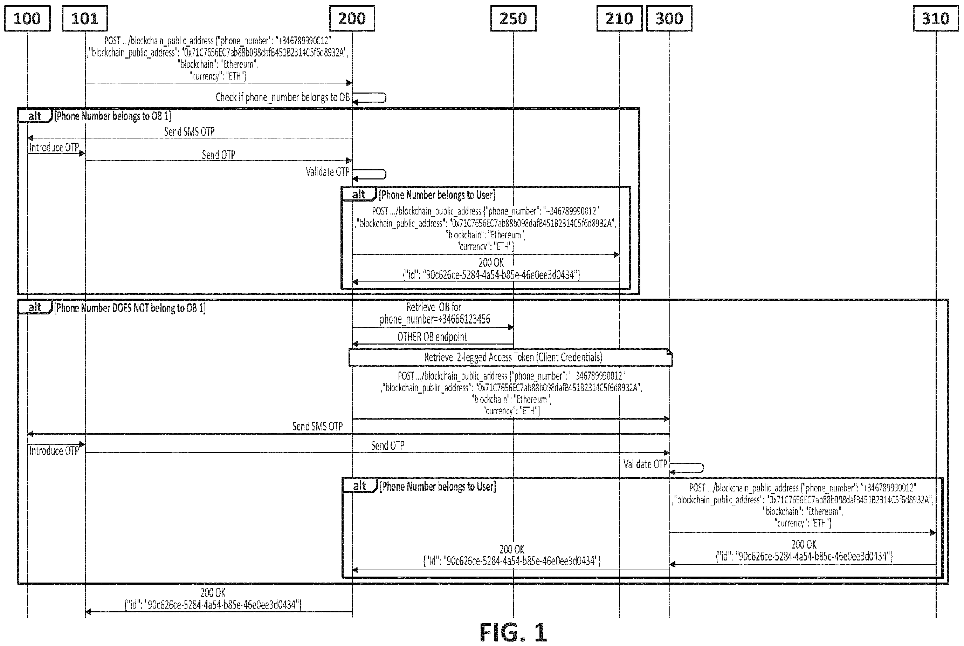

Fig. 1 shows the flow that allows to associate a blockchain public address to a user's phone number. In this case, a wallet application 101 wants to associate a blockchain public address to a user's phone number, so it invokes the POST method of the blockchain_public address API of the OB1 200 indicating: the phone number, the public address, the blockchain, and the currency.

The OB1 200 validates that the phone number belongs to that OB1 200. If the phone number belongs to the OB1 200, the latter sends a message with a password, particularly a One Time Password (OTP) SMS, to the user 100 to verify that (s)he owns the phone number SIM. The user 100, in response, enters the OTP in the wallet application 101. Then, the wallet application 101 sends the OTP to the OB1 200, which further validates that the OTP is correct. If the OTP is correct, the OB1 200 invokes the API 210 that allows to associate the public address to the phone number.

Otherwise (i.e. the phone number does not belong to that OB1 200), an OBs Revolver 250 is invoked indicating the phone number to return the backend address of the operator to which the phone number belongs. The OB1 200 invokes the POST method of the blockchain_public_address API of the OB2 300 indicating the phone number and the public address. Then, the other OB backend sends an OTP SMS to the user 100 to verify that it owns the phone number SIM. The user 100 enters the OTP in the wallet application 101 and the wallet application 101 sends the OTP to the OB2 300 such that the OB2 300 can validate if the OTP is correct. If the OTP is correct, the OB2 300 invokes the API 310 that allows to associate the public address to the phone number and returns the identifier of the association.

### 2) Retrieve blockchain public addresses associated to a phone number

This operation allows retrieving all the blockchain public addresses associated to a user's phone number. Such operation involves the following agents/elements:
- User 100: Represents the user who owns the mobile phone.
- API Client 102: Represents the client application that the user uses to manage their Web3 applications.
- OB1 Backend 200: Represents the backend of a communications operator that implements the functionalities described in the solution.
- OBs Resolver 250: It is a service that from a phone number can return the URL to the backend of the operator to which the user belongs.
- API implement by OB1 210: endpoint to retrieve the blockchain public addresses associated to a user's phone number implemented by Operator1.
- Other OB Backend (OB2) 300: Represents another operator different from the one to which the user's phone number belongs.
- API implement by OB2 310: endpoint to retrieve the blockchain public addresses associated to a user's phone number implemented by Operator2.

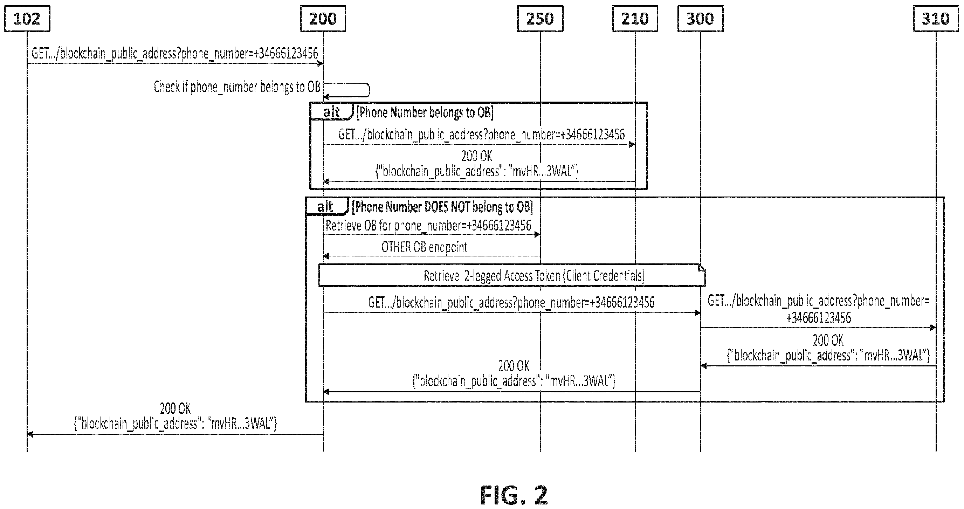

Fig. 2 shows the flow that allows to retrieve all the blockchain public addresses associated to a user's phone number. A client application (or API client) 102 wants to retrieve the blockchain public addresses associated to a user's phone number, so the application 102 invokes the GET method of the blockchain_public_address API of the OB1 indicating the phone number. The OB1 validates that this phone number belongs to that OB1 200. If the phone number belongs to the OB1 200, the latter further invokes the API 210 that allows to retrieve the public addresses associated to the phone number. Otherwise, the OB1 200 invokes an OBs Resolver 250 indicating the phone number to return the backend address of the operator to which the phone number belongs. The OB1 200 invokes the GET method of the blockchain_public_address API of the OB2 300 indicating the phone number. The OB2 300 then invokes the API 310 that allows to associate the public address to the phone number, such that the API 310 returns all the blockchain public addresses associated to the phone number to the OB2 300 and the latter further forwards the received information to the OB1 200.

### 3) Unbind blockchain public address associated to a phone number

This operation allows to unbind a blockchain public address to a user's phone number involving the following agents/elements:
- Wallet 101: Represents the client application that the user uses to manage their Web3 applications.
- OB1 Backend 200: Represents the backend of a communications operator that implements the functionalities described in the solution.
- OBs Resolver 250: It is a service that from a phone number can return the URL to the backend of the operator to which the user belongs.
- API implement by OB1 210: endpoint to unbind a phone_number with a Blockchain Public Address implemented by Operator1.
- Other OB Backend (OB2) 300: Represents another operator different from the one to which the user's phone number belongs.
- API implement by OB2 310: endpoint to unbind a phone_number with a Blockchain Public Address implemented by Operator2.

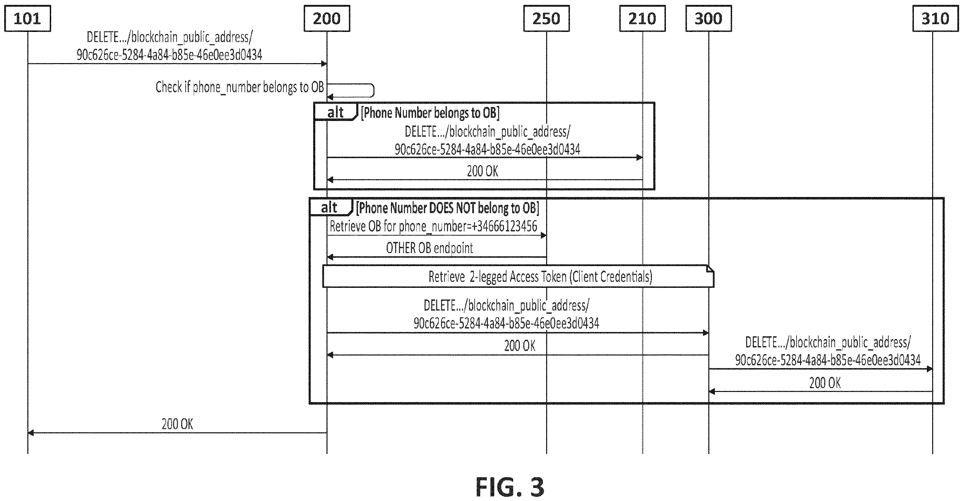

Fig. 3 shows the flow that allows to unbind a blockchain public address associated to a user's phone number. A wallet application 101 wants to unbind a blockchain public address associated to a user's phone number, so the wallet application 101 invokes the DELETE method of the blockchain_public address API of the OB1 200 indicating the binding id. The OB1 200 validates that the phone number belongs to that OB1 200. If the phone number belongs to the OB1 200, the latter further invokes the API 210 that allows to unbind the public address associated to the phone number. Otherwise, the OB1 200 invokes the OBs Resolver 250 indicating the phone number to return the backend address of the operator to which the phone number belongs. The OB1 200 invokes the DELETE method of the blockchain_public address API of the OB2 300 indicating the phone number. The OB2 300 then invokes the API 310 that allows to unbind the public address from the phone number, which returns a success status response, in this particular case, a 200 OK response.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method for performing transactions on blockchain services, the method comprising performing, by a user (100) using a computing device, a transaction on a blockchain service of a given blockchain, the blockchain service being offered by a service provider, **characterized in that** said given transaction is performed by using a phone number of the user (100) as a reference identifier on the blockchain service, the phone number being associated with at least one public address of a wallet account of the user (100).

2. The method of claim 1, wherein the association of the phone number with the at least one public address being made by:
invoking, by a wallet application (101), a POST method of a blockchain_public address API of a first backend of a first communications operator, OB1, (200) indicating the phone number, the public address, the blockchain, and a currency; and
validating, by the OB1 (200), that the phone number belongs to the OB1 (200), wherein:
if the phone number belongs to the OB1 (200), the latter sends a message comprising a password to the user (100) to verify that the user (100) owns the phone number, and the user (100) enters the password into the wallet application (101) which further forwards the password to the OB1 (200) for validation thereof, wherein if the password is correct, the OB1 (200) invokes its API (210) that allows associating the public address to the phone number; or
if the phone number does not belong to the OB1 (200), the latter further invokes an OBs resolver (250) indicating the phone number to return a backend address of the operator to which the phone number belongs, invokes the POST method of a blockchain_public address API of a second backend of a second communications operator, OB2, indicating the phone number and the public address, and sends a message comprising a password to the user (100) to verify that the user (100) owns the phone number, and the user (100) enters the password into the wallet application (101) which further forwards the password to the OB2 (300) for validation thereof, wherein if the password is correct, the OB2 (300) invokes its API (310) that allows associating the public address to the phone number.

3. The method of claim 2, wherein the password comprises a One Time Password.

4. The method of any one of the previous claims, further comprising retrieving the at least one public address associated to the phone number by:
invoking, by a client application (102), a GET method of the blockchain_public address API of the OB1 (200) indicating the phone number;
validating, by the OB1 (200), that the phone number belongs to the OB1 (200); wherein:
if the phone number belongs to the OB1 (200), the latter further invokes the API of the OB1 (200) to retrieve the public address; or
if the phone number does not belong to the OB1 (200), the latter further invokes the OBs resolver (250) indicating the phone number to return the backend address of the operator to which the phone number belongs, and invokes the GET method of the blockchain_public_address API of the OB2 (300) indicating the phone number, and the OB2 (300) invokes its API (310), the latter further returning the public address associated to the phone number.

5. The method of any one of the previous claims 1 to 4, further comprising unbinding the association of the at least one public address with the phone number by:
invoking, by the wallet application (101), a DELETE method of the blockchain_public address API of the OB1 (200) indicating a binding ID;
validating, by the OB1 (200), that the phone number belongs to the OB1 (200); wherein:
if the phone number belongs to the OB1 (200), the latter further invokes the API of the OB1 (200) to unbind the public address associated to the phone number; or
if the phone number does not belong to the OB1 (200), the latter further invokes the OBs resolver (250) indicating the phone number to return the backend address of the operator to which the phone number belongs, and invokes the DELETE method of the blockchain_public_address API of the OB2 (300) indicating the phone number, and the OB2 (300) invokes its API (310), the latter further returning a success status response.

6. The method of claim 5, wherein the success status response comprises a 200 OK response.

7. The method of any one of the previous claims, wherein the blockchain services include web3 services.

8. A system for performing transactions on blockchain services, comprising:
a computing device of a user (100);
a service provider configured to offer a blockchain service of a given blockchain; **characterized in that**:
a transaction on the blockchain service performed by the user (100) being made by using a phone number of the user (100) as a reference identifier on the blockchain service, the phone number being associated with at least one public address of a wallet account of the user (100).

9. The system of claim 8, wherein the blockchain services include web3 services.
